(19) **Europäisches Patentamt European Patent Office Office européen des brevets**

(11) **EP 4 227 325 B1**

(12) **EUROPEAN PATENT SPECIFICATION**

(45) Date of publication and mention of the grant of the patent:
**13.11.2024 Bulletin 2024/46**

(21) Application number: **21906067.0**

(22) Date of filing: **03.09.2021**

(51) International Patent Classification (IPC):
**C08C 19/20** (2006.01)    **C08C 19/36** (2006.01)
**C08L 15/02** (2006.01)    **C08J 9/04** (2006.01)

(52) Cooperative Patent Classification (CPC):
(C-Sets available)
**C08J 9/105; C08C 19/20;** A41D 13/012;
C08J 2203/04; C08J 2319/00                    (Cont.)

(86) International application number:
**PCT/JP2021/032526**

(87) International publication number:
**WO 2022/130702 (23.06.2022 Gazette 2022/25)**

(54) **RUBBER MATERIAL, RUBBER COMPOSITION, VULCANIZED OBJECT, FOAMED OBJECT, AND WET SUIT**

KAUTSCHUKMATERIAL, KAUTSCHUKZUSAMMENSETZUNG, VULKANISIERTES OBJEKT, GESCHÄUMTES OBJEKT UND NASSANZUG

MATÉRIAU DE CAOUTCHOUC, COMPOSITION DE CAOUTCHOUC, OBJET VULCANISÉ, OBJET EN MOUSSE ET COMBINAISON ISOTHERME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2020 JP 2020206562**

(43) Date of publication of application:
**16.08.2023 Bulletin 2023/33**

(73) Proprietor: **Denka Company Limited Tokyo 103-8338 (JP)**

(72) Inventors:
• **KUMAGAI Yushi**
  **Tokyo 103-8338 (JP)**
• **MATSUDA Hidehiro**
  **Tokyo 103-8338 (JP)**
• **TADA Misaki**
  **Tokyo 103-8338 (JP)**
• **KIYOFUJI Gaito**
  **Tokyo 103-8338 (JP)**

(74) Representative: **Hoffmann Eitle Patent- und Rechtsanwälte PartmbB Arabellastraße 30 81925 München (DE)**

(56) References cited:
| | |
|---|---|
| **EP-A1- 2 399 954** | **EP-A1- 2 644 625** |
| **EP-A1- 3 715 409** | **EP-A1- 4 223 787** |
| **WO-A1-2014/157602** | **WO-A1-2020/137297** |
| **WO-A1-2022/085333** | **JP-A- 2013 144 748** |
| **JP-A- 2014 070 214** | **JP-A- 2014 169 378** |
| **JP-A- 2019 044 116** | **JP-A- 2020 139 009** |
| **JP-A- 2020 196 784** | **JP-A- 2020 196 785** |
| **JP-A- S6 031 510** | **US-A1- 2015 203 613** |

(52) Cooperative Patent Classification (CPC): (Cont.)

C-Sets
**C08F 136/18, C08F 2/26;**
**C08F 136/18, C08F 4/28;**
**C08L 15/02, C08L 91/00, C08L 91/08, C08K 3/22,**
**C08K 5/435, C08K 5/09, C08K 5/101, C08K 5/18,**
**C08K 5/39, C08K 3/04, C08K 3/346, C08K 3/06**

## Description

### Technical Field

The present invention relates to a rubber material, a rubber composition, a vulcanizate, a foamed product, a wet suit, and the like.

### Background Art

A chloroprene polymer has been used in various fields by taking advantages of excellent properties thereof. For example, the chloroprene polymer has been used as a material for a common industrial belt, an automobile air spring, a vibration-proof rubber, or the like, by taking advantages of excellent dynamic properties thereof. Furthermore, a foamed product obtained by foaming a rubber composition containing a chloroprene polymer has been used in various fields such as automotive parts, architecture fields, and leisure goods.

As such a foamed product, a foamed product obtained by heat-foaming a rubber composition containing a chloroprene rubber, an organic peroxide, a foaming agent, a softener, a filler, and a reinforcing agent (see, for example, Patent Literature 1 below), a foamed product obtained by foaming a rubber composition containing a chloroprene rubber, a butadiene rubber, a softener, and a foaming agent by non-pressure open vulcanization (see, for example, Patent Literature 2 below), and the like are known.

Patent Literature 3 relates to a rubber composition containing chloroprene rubber and chlorinated polyethylene as main components.

Patent Literature 4 relates to a foam made of a rubber composition comprising chloroprene and cellulose nanofibers, and which is lightweight and exhibits high hardness.

### Citation List

### Patent Literature

Patent Literature 1: Japanese Unexamined Patent Publication No. 2012-067235
Patent Literature 2: Japanese Unexamined Patent Publication No. H10-298328

Patent Literature 3: Japanese Unexamined Patent Publication No. JP 2014-169378A
Patent Literature 4: Japanese Unexamined Patent Publication No. JP 2020-139009A

### Summary of Invention

### Technical Problem

According to the findings of the present inventor, when a foamed product is obtained by foaming a rubber composition containing a chloroprene polymer, the foamed product shrinks over time in some cases. When the foamed product excessively shrinks, wrinkles and the like may be generated, and thus it is required to suppress shrinkage after foaming. Furthermore, for the rubber composition containing a chloroprene polymer, it is required to obtain a foamed product having excellent ozone resistance while suppressing such shrinkage.

An object of an aspect of the present invention is to provide a rubber material with which a foamed product having excellent ozone resistance can be obtained while suppressing shrinkage after foaming. An object of another aspect of the present invention is to provide a rubber composition containing the above-described rubber material. An object of still another aspect of the present invention is to provide a vulcanizate of the above-described rubber composition. An object of still another aspect of the present invention is to provide a foamed product of the above-described rubber material. An object of still another aspect of the present invention is to provide a wet suit including the above-described foamed product.

### Solution to Problem

A rubber material of an aspect of the present invention is a rubber material containing a sulfur-modified chloroprene polymer, in which a content of a chloroprene monomer unit is 98% by mass or more on the basis of a total amount of monomer units constituting the sulfur-modified chloroprene polymer, a content X (% by mass) of sulfur constituting the sulfur-modified chloroprene polymer and a total amount Y (% by mass) of a conjugate resin acid and a salt of a conjugate resin acid, on the basis of a total amount of the rubber material, satisfy Expression (A) below, the content X is 0.25 % by mass or more, and the total amount Y is 1.00% by mass or more.

$$13.90X - 5.10 \leq Y \qquad (A)$$

According to such a rubber material, a foamed product having excellent ozone resistance can be obtained while suppressing shrinkage after foaming.

A first embodiment of a rubber composition of another aspect of the present invention contains the aforementioned rubber material and a vulcanizing agent. A second embodiment of the rubber composition of another aspect of the present invention contains the aforementioned rubber material and a foaming agent. A vulcanizate of still another aspect of the present invention is a vulcanizate of the rubber composition of the first embodiment. A foamed product of still another aspect of the present invention is a foamed product of the rubber composition of the second embodiment. A wet suit of still another aspect of the present invention includes the above-described foamed product.

**Advantageous Effects of Invention**

According to an aspect of the present invention, it is possible to provide a rubber material with which a foamed product having excellent ozone resistance can be obtained while suppressing shrinkage after foaming. According to another aspect of the present invention, it is possible to provide a rubber composition containing the above-described rubber material. According to still another aspect of the present invention, it is possible to provide a vulcanizate of the above-described rubber composition. According to still another aspect of the present invention, it is possible to provide a foamed product of the above-described rubber material. According to still another aspect of the present invention, it is possible to provide a wet suit including the above-described foamed product.

**Brief Description of Drawings**

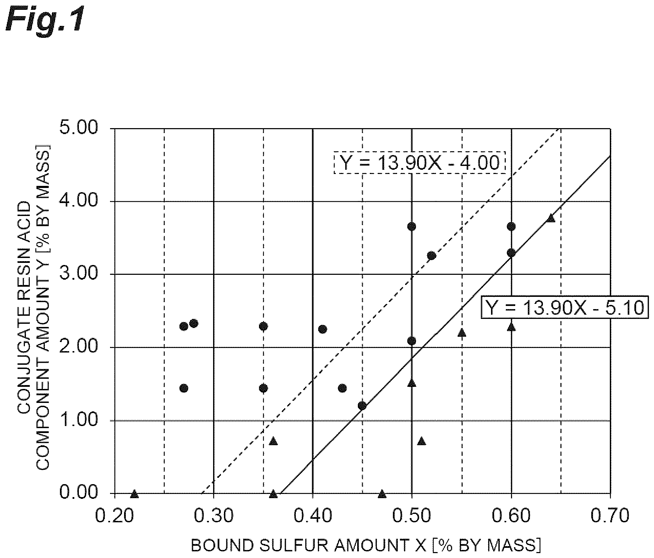

FIG. 1 is a view showing a relation between a content of bound sulfur and a content of a conjugate resin acid component in a rubber material.

**Description of Embodiments**

Hereinafter, embodiments for carrying out the present invention will be described. Embodiments described below are only typical exemplary embodiments of the present invention and the scope of the present invention is not restricted by these at all.

"A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. The term "step" includes not only an independent step but also a step by which an intended action of the step is achieved, though the step cannot be clearly distinguished from other steps. An "alkyl group" may be linear, branched or cyclic, unless otherwise specified.

<Rubber material>

A rubber material of the present embodiment contains a sulfur-modified chloroprene polymer. In the rubber material of the present embodiment, a content of a chloroprene monomer unit is 98% by mass or more on the basis of a total amount of monomer units constituting the sulfur-modified chloroprene polymer, a content X (% by mass) of sulfur constituting the sulfur-modified chloroprene polymer and a total amount Y (% by mass) of a conjugate resin acid and a salt of a conjugate resin acid, on the basis of a total amount of the rubber material, satisfy Expression (A) below, the content X is 0.25 % by mass or more, and the total amount Y is 1.00% by mass or more.

$$13.90X - 5.10 \leq Y \qquad (A)$$

A foamed product can be obtained by foaming the rubber material of the present embodiment. According to the rubber material of the present embodiment, by foaming this rubber material, a foamed product having excellent ozone resistance can be obtained while suppressing shrinkage after foaming. The rubber material of the present embodiment has a state where the aforementioned foamed product can be obtained when the rubber material is foamed, and may be used in various use applications without being foamed.

The present inventor has been conducted intensive studies, and as a result, has found that it is effective to adjust the content X of the sulfur constituting the sulfur-modified chloroprene polymer and the total amount Y of the conjugate resin acid and the salt of the conjugate resin acid for suppressing shrinkage after foaming and improving ozone resistance, and has found that a foamed product having excellent ozone resistance can be obtained while suppressing shrinkage after foaming in a case where the total amount Y satisfies Expression (A) having a linear boundary with respect to the content X and is 1.00% by mass or more.

The sulfur-modified chloroprene polymer has chloroprene (2-chloro-1,3-butadiene) as a monomer unit (chloroprene monomer unit; monomer unit = structural unit), and can have a chloroprene-derived monomer unit. Examples of the sulfur-modified chloroprene polymer include a homopolymer of chloroprene and a copolymer of chloroprene (a copolymer of chloroprene and a monomer copolymerizable with chloroprene), and a mixture of these polymers may be used. The sulfur-modified chloroprene polymer may contain a homopolymer of chloroprene from the viewpoint of easily obtaining a foamed product having excellent ozone resistance while suppressing shrinkage after foaming. The polymer structure of the sulfur-modified chloroprene polymer is not particularly limited.

Examples of the monomer copolymerizable with chloroprene include esters of (meth)acrylic acid (such as methyl (meth)acrylate, butyl (meth)acrylate, and 2-ethylhexyl (meth)acrylate), hydroxyalkyl (meth)acrylate (such as 2-hydroxymethyl (meth)acrylate, 2-hydroxyethyl (meth)acrylate, and 2-hydroxypropyl (meth)acrylate), 2,3-dichloro-1,3-butadiene, 1-chloro-1,3-butadiene, butadiene, isoprene, ethylene, styrene, and acrylonitrile. The monomer copolymerizable with chloroprene is not limited to one kind, and, for example, the copolymer of chloroprene may be a copolymer obtained by copolymerizing three or more kinds of monomers containing chloroprene.

The content of the chloroprene monomer unit is 98% by mass or more, or may be 99% by mass or more, on the basis of the total amount of the monomer units constituting the sulfur-modified chloroprene polymer.

The sulfur-modified chloroprene polymer has sulfur constituting the sulfur-modified chloroprene polymer (bound sulfur, sulfur that is bound to the sulfur-modified chloroprene polymer). The sulfur constituting the sulfur-modified chloroprene polymer is chemically bound directly and indirectly to the chloroprene monomer unit so as to constitute the sulfur-modified chloroprene polymer. The sulfur-modified chloroprene polymer may have a monosulfide bond and/or a polysulfide bond (for example, $S_2$ to $S_8$) constituting the sulfur-modified chloroprene polymer.

The content X of the sulfur constituting the sulfur-modified chloroprene polymer (bound sulfur) may be more than 0% by mass and in the following range on the basis of the total amount of the rubber material. The content X is 0.25% by mass or more, or may be more than 0.25% by mass, 0.27% by mass or more, 0.28% by mass or more, 0.30% by mass or more, 0.35% by mass or more, 0.40% by mass or more, 0.41% by mass or more, 0.42% by mass or more, 0.43% by mass or more, 0.45% by mass or more, or 0.50% by mass or more, from the viewpoint of easily suppressing shrinkage after foaming. The content X may be 1.00% by mass or less, 0.90% by mass or less, 0.80% by mass or less, 0.70% by mass or less, 0.60% by mass or less, 0.55% by mass or less, 0.52% by mass or less, 0.50% by mass or less, 0.45% by mass or less, 0.43% by mass or less, 0.42% by mass or less, 0.41% by mass or less, 0.40% by mass or less, 0.35% by mass or less, 0.30% by mass or less, 0.28% by mass or less, or 0.27% by mass or less, from the viewpoint of easily obtaining excellent ozone resistance. From these viewpoints, the content X may be 0.10 to 1.00% by mass, 0.25 to 0.60% by mass, 0.25 to 0.55% by mass, 0.25 to 0.50% by mass, 0.25 to 0.45% by mass, 0.25 to 0.41% by mass, 0.25 to 0.30% by mass, 0.30 to 0.60% by mass, 0.40 to 0.60% by mass, 0.50 to 0.60% by mass, 0.30 to 0.50% by mass, or 0.40 to 0.50% by mass. The content X may be 0.52% by mass or more, 0.55% by mass or more, or 0.60% by mass or more. The content X can be measured by an oxygen combustion flask method defined in JIS K 6233-1. The content X tends to increase, for example, by an increase in used amount of the sulfur used at the time of polymerization of a sulfur-modified chloroprene polymer.

The sulfur-modified chloroprene polymer may not have at least one selected from the group consisting of a structure represented by General Formula (I) below and a structure represented by General Formula (II) below in the molecular terminal ($R^1$ represents an alkyl group having 1 to 4 carbon atoms, and $R^2$ represents an alkyl group having 8 to 20 carbon atoms).

$$-S-C(=S)-OR^1 \qquad (I)$$

$$-S-R^2 \qquad (II)$$

The rubber material of the present embodiment may contain sulfur not constituting the sulfur-modified chloroprene polymer (free sulfur, sulfur that is not bound to the sulfur-modified chloroprene polymer) from the viewpoint of easily obtaining a foamed product having excellent ozone resistance while suppressing shrinkage after foaming. The sulfur not constituting the sulfur-modified chloroprene polymer is not chemically bound directly and indirectly to the chloroprene monomer unit and does not constitute the sulfur-modified chloroprene polymer.

A content $C_1$ of the sulfur not constituting the sulfur-modified chloroprene polymer (free sulfur) may be in the following range on the basis of the total amount of the rubber material. The content $C_1$ may be 0.10% by mass or more, 0.15% by mass or more, 0.20% by mass or more, 0.21% by mass or more, 0.23% by mass or more, 0.25% by mass or more, 0.28% by mass or more, 0.30% by mass or more, 0.35% by mass or more, 0.36% by mass or more, 0.38% by mass or more, 0.40% by mass or more, or 0.43% by mass or more, from the viewpoint of easily suppressing shrinkage after foaming. The content $C_1$ may be 1.00% by mass or less, 0.90% by mass or less, 0.80% by mass or less, 0.70% by mass or less, 0.60% by mass or less, 0.55% by mass or less, 0.52% by mass or less, 0.50% by mass or less, 0.45% by mass or less, 0.43% by mass or less, 0.40% by mass or less, 0.38% by mass or less, 0.36% by mass or less, 0.35% by mass or less, 0.30% by mass or less, 0.28% by mass or less, 0.25% by mass or less, 0.23% by mass or less, or 0.21% by mass or less, from the viewpoint of easily obtaining excellent ozone resistance. From these viewpoints, the content $C_1$ may be 0.10 to 1.00% by mass, 0.20 to 0.60% by mass, 0.20 to 0.50% by mass, 0.20 to 0.43% by mass, 0.20 to 0.40% by mass, 0.20 to 0.30% by mass, 0.20 to 0.25% by mass, 0.25 to 0.60% by mass, 0.30 to 0.60% by mass, 0.40 to 0.60% by mass, 0.25 to 0.50% by mass, or 0.25 to 0.43% by mass. The content $C_1$ may be 0.45% by mass or more, 0.50% by mass or more, or 0.52% by mass or more. The content $C_1$ may be 0.20% by mass or less. The content $C_1$ can be measured by liquid chromatography. The content $C_1$ tends to increase, for example, by an increase in used amount of the sulfur used at the time of polymerization of a sulfur-modified chloroprene polymer.

A total amount $C_2$ of the sulfur constituting the sulfur-modified chloroprene polymer (bound sulfur) and the sulfur not constituting the sulfur-modified chloroprene polymer (free sulfur) may be more than 0% by mass and in the following range on the basis of the total amount of the rubber material. The total amount $C_2$ may be 0.20% by mass or more, 0.30% by mass or more, 0.40% by mass or more, 0.45% by mass or more, 0.47% by mass or more, 0.49% by mass or more, 0.50% by mass or more, 0.55% by mass or more, 0.58% by mass or more, 0.60% by mass or more, 0.63% by mass or more, 0.65% by mass or more, 0.70% by mass or more, 0.75% by mass or more, 0.79% by mass or more, 0.80% by mass or more, 0.83% by mass or more, 0.85% by mass or more, 0.90% by mass or more, or 0.93% by mass or more, from the viewpoint of easily suppressing shrinkage after foaming. The total amount $C_2$ may be 2.00% by mass or less, 1.50% by mass or less, 1.20% by mass or less, 1.12% by mass or less, 1.10% by mass or less, 1.00% by mass or less, 0.97% by mass or less, 0.95% by mass or less, 0.93% by mass or less, 0.90% by mass or less, 0.85% by mass or less, 0.83% by mass or less, 0.80% by mass or less, 0.79% by mass or less, 0.75% by mass or less, 0.70% by mass or less, 0.65% by mass or less, 0.63% by mass or less, 0.60% by mass or less, 0.58% by mass or less, 0.55% by mass or less, 0.50% by mass or less, or 0.49% by mass or less, from the viewpoint of easily obtaining excellent ozone resistance. From these viewpoints, the total amount $C_2$ may be 0.20 to 2.00% by mass, 0.40 to 1.20% by mass, 0.40 to 1.00% by mass, 0.40 to 0.93% by mass, 0.40 to 0.80% by mass, 0.40 to 0.70% by mass, 0.40 to 0.60% by mass, 0.40 to 0.50% by mass, 0.50 to 1.20% by mass, 0.70 to 1.20% by mass, 0.80 to 1.20% by mass, 0.90 to 1.20% by mass, 0.50 to 1.00% by mass, 0.70 to 1.00% by mass, or 0.80 to 1.00% by mass. The total amount $C_2$ may be 0.95% by mass or more, 0.97% by mass or more, 1.00% by mass or more, 1.10% by mass or more, or 1.12% by mass or more. The total amount $C_2$ may be 0.47% by mass or less.

The rubber material of the present embodiment contains a conjugate resin acid and a salt of a conjugate resin acid. Examples of the salt of the conjugate resin acid include alkaline metal salts (such as a sodium salt and a potassium salt). The conjugate resin acid component is a compound that may be contained in rosin acids. The conjugate resin acid component may be a residue of an emulsifier used in a polymerization step for obtaining a sulfur-modified chloroprene polymer, and may be contained in rosin acids to be mixed with a sulfur-modified chloroprene polymer after obtaining a sulfur-modified chloroprene polymer.

The "rosin acids" encompasses a conjugate resin acid, a disproportionated rosin acid, an alkaline metal salt of a conjugate resin acid (for example, a potassium salt of a conjugate resin acid), an alkaline metal salt of a disproportionated rosin acid (for example, a disproportionated potassium rosinate salt), and the like. The conjugate resin acid includes at least one selected from the group consisting of abietic acid, palustric acid, neoabietic acid, and levopimaric acid. Examples of the disproportionated rosin acid include sesquiterpene, 8,5-isopimaric acid, dihydropimaric acid, secodehydroabietic acid, dehydroabietic acid, dihydroabietic acid, deisopropyldehydroabietic acid, and demethyldehydroabietic acid.

The total amount Y of the conjugate resin acid and the salt of the conjugate resin acid is 1.00% by mass or more on the basis of the total amount of the rubber material, from the viewpoint of obtaining a foamed product having excellent ozone resistance while suppressing shrinkage after foaming. The total amount Y can be measured by gas chromatography. The total amount Y tends to increase, for example, by an increase in used amount of rosin acids as an emulsifier at the time of polymerization of a sulfur-modified chloroprene polymer, used amount of rosin acids to be mixed with a sulfur-modified chloroprene polymer after obtaining a sulfur-modified chloroprene polymer, or the like. As the total amount Y, the sum of contents of an abietic acid component, a palustric acid component, a neoabietic acid component, and a levopimaric acid component can be used.

The total amount Y may be in the following range on the basis of the total amount of the rubber material. The total amount Y may be 1.10% by mass or more, 1.20% by mass or more, 1.30% by mass or more, 1.40% by mass or more, 1.45% by mass or more, 1.50% by mass or more, 1.60% by mass or more, 1.80% by mass or more, 2.00% by mass or more, 2.20% by mass or more, or 2.30% by mass or more, from the viewpoint of achieving an excellent balance between a shrinkage rate after foaming and ozone resistance. The total amount Y may be 10.00% by mass or less, 5.00% by mass or less, 4.50% by mass or less, 4.00% by mass or less, 3.70% by mass or less, 3.60% by mass or less, 3.50% by mass or less, 3.30% by mass or less, 3.26% by mass or less, 3.20% by mass or less, 3.00% by mass or less, 2.50% by mass or less, 2.40% by mass or less, 2.30% by mass or less, 2.20% by mass or less, 2.00% by mass or less, 1.80% by mass or less, 1.60% by mass or less, 1.50% by mass or less, or 1.45% by mass or less, from the viewpoint of achieving an excellent balance between a shrinkage rate after foaming and ozone resistance. From these viewpoints, the total amount Y may be 1.00 to 10.00% by mass, 1.20 to 4.00% by mass, 1.20 to 3.70% by mass, 1.20 to 3.00% by mass, 1.20 to 2.50% by mass, 1.20 to 2.30% by mass, 1.20 to 2.20% by mass, 1.40 to 3.70% by mass, 1.50 to 3.70% by mass, 2.00 to 3.70% by mass, 2.20 to 3.70% by mass, 2.30 to 3.70% by mass, 1.40 to 3.20% by mass, 1.50 to 3.20% by mass, 2.00 to 3.20% by mass, or 2.20 to 3.20% by mass. The total amount Y may be 2.40% by mass or more, 2.50% by mass or more, 3.00% by mass or more, 3.20% by mass or more, 3.26% by mass or more, 3.30% by mass or more, 3.50% by mass or more, or 3.60% by mass or more. The total amount Y may be 1.40% by mass or less, or 1.30% by mass or less.

In the rubber material of the present embodiment, the content X (% by mass) of the sulfur constituting the sulfur-modified chloroprene polymer and the total amount Y (% by mass) of the conjugate resin acid and the salt of the conjugate resin acid, on the basis of the total amount of the rubber material, satisfy Expression (A) below, from the viewpoint of obtaining a foamed product having excellent ozone resistance while suppressing shrinkage after foaming.

$$13.90X - 5.10 \leq Y \qquad (A)$$

In the rubber material of the present embodiment, the content X (% by mass) of the sulfur constituting the sulfur-modified chloroprene polymer and the total amount Y (% by mass) of the conjugate resin acid and the salt of the conjugate resin acid, on the basis of the total amount of the rubber material, may satisfy Expression (B) below, from the viewpoint of easily obtaining particularly excellent ozone resistance. It is speculated that a foamed product having particularly excellent ozone resistance is easily obtained while suppressing shrinkage after foaming by favorably obtaining interaction between the content X and the total amount Y However, the factor is not limited to these contents.

$$13.90X - 4.00 \leq Y \qquad (B)$$

The rubber material of the present embodiment may be an embodiment in which the content X and the total amount Y satisfy Expression (B), the content X is 0.25 to 0.55% by mass, and the total amount Y is 1.40% by mass or more, from the viewpoint of achieving an excellent balance between a shrinkage rate after foaming and ozone resistance and easily obtaining particularly excellent ozone resistance.

The rubber material of the present embodiment may contain components other than the sulfur-modified chloroprene polymer, the conjugate resin acid component, and the sulfur not constituting the sulfur-modified chloroprene polymer (free sulfur). Examples of such components include a residue of a component used in polymerization of a sulfur-modified chloroprene polymer, a residue of a component used in plasticization of a sulfur-modified chloroprene polymer, and a component to be mixed after polymerization and before plasticization, and specific examples thereof include various monomers, an emulsifier (excluding a conjugate resin acid component), and a plasticizer. The emulsifier may be added at the time of polymerization, and may be added after polymerization and before plasticization.

As the emulsifier, it is possible to use a known emulsifier which can be used in emulsion polymerization of chloroprene. Examples of the emulsifier include rosin acids, fatty acids, a metal salt of aromatic sulfonic acid formalin condensate (for example, a sodium salt of β-naphthalene sulfonic acid formalin condensate), sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate. Examples of the fatty acids include fatty acids (for example, saturated or unsaturated fatty acids having 6 to 22 carbon atoms) and metal salts of fatty acids (for example, sodium laurylsulfate).

Examples of the plasticizer used as a constituent material for the rubber material include tetraalkylthiuram disulfide (for example, tetraalkylthiuram disulfide having an alkyl group with 1 to 7 carbon atoms, such as tetraethylthiuram disulfide), a dialkyldithiocarbamic acid salt (for example, a dialkyldithiocarbamic acid salt having an alkyl group with 1 to 7 carbon atoms, such as nickel dibutyldithiocarbamate).

The content of the plasticizer in the rubber material of the present embodiment may be less than 1% by mass, 0.1% by mass or less, or 0.01% by mass or less, on the basis of the total amount of the rubber material.

The rubber material of the present embodiment encompasses a latex obtained by plasticizing a sulfur-modified chloroprene polymer, which is obtained by subjecting a single substance of chloroprene or chloroprene and another monomer to polymerization in the presence of sulfur (for example, $S_8$), and a rubber material obtained by drying and washing this latex.

A method for producing a rubber material of the present embodiment includes a polymerization step of subjecting chloroprene to polymerization (for example, emulsion polymerization) in the presence of sulfur (for example, $S_8$) to obtain a sulfur-modified chloroprene polymer. In the polymerization step, chloroprene may be polymerized alone, and chloroprene and the aforementioned monomer copolymerizable with chloroprene may be polymerized. In the polymerization step, a polymer can be obtained by subjecting chloroprene to polymerization (for example, emulsion polymerization) in the presence of sulfur and a conjugate resin acid component. In the polymerization step, emulsion polymerization can be performed using a conjugate resin acid component as an emulsifier, and emulsion polymerization can be performed using rosin acids containing a conjugate resin acid component as an emulsifier.

In the polymerization step, sulfur can be introduced into a chloroprene polymer (for example, a main chain of a chloroprene polymer), and for example, a monosulfide bond and/or a polysulfide bond ($S_2$ to $S_8$) can be introduced. The used amount of sulfur (for example, $S_8$) may be 0.30 to 0.85 parts by mass with respect to 100 parts by mass of the monomers (the total of the monomers to be polymerized).

In the case of performing emulsion polymerization in the polymerization step, the pH of an emulsion (for example, an aqueous emulsion) at the time of emulsion polymerization initiation may be 10.5 or more. The "emulsion" is a liquid mixture of chloroprene and other components (such as a monomer copolymerizable with chloroprene, an emulsifier, and sulfur) immediately before emulsion polymerization initiation. The "emulsion" also encompasses a case where the composition thereof sequentially varies by adding these other components afterward, portionwise, etc. When the pH of the emulsion is 10.5 or more, polymer precipitation or the like during polymerization is prevented so that the polymerization can be stably controlled. This effect can be particularly suitably obtained in the case of using rosin acids as an emulsifier. The pH of the emulsion can be adjusted by the amount of the alkali component such as sodium hydroxide or potassium hydroxide, which is present during emulsion polymerization.

The polymerization temperature of polymerization may be 0 to 55°C or 30 to 55°C, from the viewpoint of excellent polymerization regulation and productivity.

As a polymerization initiator, a compound usually used in radical polymerization can be used, and potassium persulfate, benzoyl peroxide, ammonium persulfate, hydrogen peroxide, or the like can be used. The polymerization rate of polymerization may be 60 to 90% or 70 to 80%. After an intended polymerization rate is obtained, polymerization can be terminated by adding a polymerization terminator (polymerization inhibitor). Examples of the polymerization terminator include diethylhydroxylamine, thiodiphenylamine, 4-tert-butylcatechol, and 2,2'-methylenebis-4-methyl-6-tert-butylphenol.

In the method for producing a rubber material of the present embodiment, after the polymerization step, rosin acids containing a conjugate resin acid component may be added to a post-polymerization polymer solution (for example, a post-emulsion polymerization aqueous emulsion) containing a sulfur-modified chloroprene polymer.

The method for producing a rubber material of the present embodiment may include a removing step of removing unreacted monomers after the polymerization step. The unreacted monomers can be removed by common distillation under a reduced pressure, or the like.

The method for producing a rubber material of the present embodiment may include a plasticization step of plasticizing the sulfur-modified chloroprene polymer after the polymerization step. In this case, the Mooney viscosity of the rubber material can be lowered. In the plasticization step, the sulfur-modified chloroprene polymer and a plasticizer may be mixed, and as a result of this, the molecular chains of the sulfur-modified chloroprene polymer can be cleaved. The plasticizer may be added to a post-polymerization polymer solution (for example, a post-emulsion polymerization aqueous emulsion) containing a sulfur-modified chloroprene polymer. The plasticizer may be added at any time before or after the removal of the unreacted monomers, and may be added at both times before and after the removal of the unreacted monomers.

The method for producing a rubber material of the present embodiment may include an isolation step of isolating the rubber material after the polymerization step and the plasticization step. In the isolation step, the rubber material may be isolated by a common freeze-solidification method.

The method for producing a rubber material of the present embodiment may include a pH adjustment step of adjusting the pH of the polymer solution after the polymerization step and the plasticization step and before the isolation step. In the pH adjustment step, the pH can be adjusted to 5.5 to 7.5 from the viewpoint of easily facilitating isolation of the rubber material by suppressing occurrence of aggregates. The pH can be adjusted, for example, with an acid such as acetic acid.

<Rubber composition>

A rubber composition (sulfur-modified chloroprene rubber composition) of the present embodiment contains the rubber material of the present embodiment, and further contains an additive different from this rubber material. The rubber composition of the present embodiment can be obtained as a compound composition by mixing the rubber material with the additive using a roll, a banbury mixer, an extruder, or the like.

As the additive, it is possible to use a known component to be mixed with the rubber material obtained through polymerization of a chloroprene polymer, plasticization, pH adjustment, and the like. Examples of the additive include a vulcanizing agent, a foaming agent, a processing aid, a stabilizer, a metal compound (excluding a compound corresponding to a vulcanizing agent), a plasticizer, and a filler. The rubber composition of the present embodiment may be an embodiment containing the rubber material of the present embodiment and a vulcanizing agent. Furthermore, the rubber composition of the present embodiment may be an embodiment containing the rubber material of the present embodiment and a foaming agent. The rubber composition of the present embodiment may contain the rubber material of the present embodiment, a vulcanizing agent, and a foaming agent.

Examples of the vulcanizing agent include a metal oxide. Examples of the metal oxide include zinc oxide, magnesium oxide, lead oxide, trilead tetraoxide, iron trioxide, titanium dioxide, calcium oxide, and hydrotalcite. The content of the vulcanizing agent may be 3 to 15 parts by mass with respect to 100 parts by mass of the rubber material.

Examples of the foaming agent include an organic foaming agent and an inorganic foaming agent (such as sodium hydrogen carbonate and ammonium carbonate). The foaming agent may include an organic foaming agent from the viewpoint of easily obtaining a high foaming ratio. Examples of the organic foaming agent include a hydrazide-based foaming agent, a nitroso-based foaming agent, and an azo-based foaming agent. The organic foaming agent may include a hydrazide-based foaming agent from the viewpoint of easily obtaining a high foaming ratio. Examples of the hydrazide-based foaming agent include p,p'-oxybisbenzenesulfonyl hydrazide, benzenesulfonyl hydrazide, toluenesulfonyl hydrazide, and hydrazodicarbonamide. Examples of the nitroso-based foaming agent include N,N'-dinitrosopentamethylenetetramine. Examples of the azo-based foaming agent include diazoaminebenzene, azodicarbonamide, azobisisobutyronitrile, and bariumazodicarboxylate. The content of the foaming agent may be 1 to 20 parts by mass, 3 to 15 parts by mass, or 5 to 10 parts by mass, with respect to 100 parts by mass of the rubber material.

Examples of the processing aid include fatty acids such as stearic acid; paraffin-based processing aids (paraffin wax) such as polyethylene; fatty acid esters; fatty acid amides; and sulfur factice. The content of the processing aid may be 0.5 to 5 parts by mass with respect to 100 parts by mass of the rubber material.

The stabilizer can be used for preventing a change in Mooney viscosity during storage. Examples of the stabilizer include phenyl-$\alpha$-naphthylamine, octylated diphenylamine, 2,6-di-tert-butyl-4-phenylphenol, 2,2'-methylenebis(4-methyl-6-tert-butylphenol), and 4,4'-thiobis-(6-tert-butyl-3-methylphenol).

The metal compound is a compound which can be added for adjusting the vulcanization rate of the rubber material or suppressing the degradation of the rubber material by adsorbing chlorine sources such as hydrogen chloride generated by dehydrochlorination reaction of the rubber material. Examples of the metal compound include oxides or hydroxides of zinc, titanium, magnesium, lead, iron, beryllium, calcium, barium, germanium, zirconium, vanadium, molybdenum, tungsten, and the like. The content of the metal compound is not particularly limited, and may be 3 to 15 parts by mass with respect to 100 parts by mass of the rubber material, from the viewpoint of easily improving the tear strength of a foamed product to be obtained using the rubber material.

The plasticizer can be used for lowering the hardness of the rubber material (improving foaming efficiency) to improve the texture of a foamed product. Examples of the plasticizer include dioctyl phthalate, dioctyl adipate (also known as bis(2-ethylhexyl) adipate), white oils, silicone oils, naphthene oils (for example, naphthenic process oils), aroma oils (for example, aromatic process oils), triphenyl phosphate, and tricresyl phosphate. The content of the plasticizer is not particularly limited, and may be more than 0 parts by mass and 50 parts by mass or less with respect to 100 parts by mass of the rubber material, from the viewpoint of easily obtaining a foamed product excellent in the balance between a shrinkage rate after foaming and ozone resistance while maintaining the tear strength of the foamed product.

The filler is a component which can be added as a reinforcing agent for the rubber material. Examples of the filler include carbon black, DIXIE CLAY, silica, clay, talc, and calcium carbonate. The content of the filler is not particularly limited, and may be more than 0 parts by mass and 100 parts by mass or less with respect to 100 parts by mass of the rubber material, from the viewpoint of easily obtaining a foamed product excellent in the balance between a shrinkage rate after foaming and ozone resistance while maintaining the molding processability of the rubber material.

The content of polyisobutylene in the rubber composition of the present embodiment may be 3 parts by mass or less, 1 part by mass or less, 0.1 parts by mass or less, or 0.01 parts by mass or less, and may be 0 parts by mass, with respect to 100 parts by mass of the rubber material. The content of boric acid in the rubber composition of the present embodiment may be less than 0.01 parts by mass, 0.001 parts by mass or less, or 0.0001 parts by mass or less, and may be 0 parts by mass, with respect to 100 parts by mass of the rubber material.

The content of the rubber material of the present embodiment may be in the following range on the basis of the total mass of the rubber composition. The content of the rubber material may be 10% by mass or more, 20% by mass or more, 30% by mass or more, 40% by mass or more, or 50% by mass or more, from the viewpoint of easily obtaining a foamed product having excellent ozone resistance while suppressing shrinkage after foaming. The content of the rubber material may be 90% by mass or less, 80% by mass or less, 70% by mass or less, 60% by mass or less, or 55% by mass or less, from the viewpoint of easily obtaining a foamed product having excellent ozone resistance while suppressing shrinkage after foaming. From these viewpoints, the content of the rubber material may be 10 to 90% by mass, 30 to 80% by mass, or 40 to 60% by mass.

<Vulcanizate, foamed product, molded article, laminate, and wet suit>

A vulcanizate of the present embodiment is a vulcanizate obtained using the rubber material of the present embodiment. The vulcanizate of the present embodiment is a vulcanizate of the rubber material of the present embodiment or a vulcanizate of the rubber composition of the present embodiment, and can be obtained by vulcanizing the rubber material of the present embodiment or the rubber composition of the present embodiment. For example, the vulcanizate of the present embodiment can be obtained by vulcanizing a rubber composition containing the rubber material of the present embodiment and a vulcanizing agent.

A foamed product (foamed article) of the present embodiment is a foamed product obtained using the rubber material of the present embodiment. The foamed product of the present embodiment is a foamed product of the rubber material of the present embodiment or a foamed product of the rubber composition of the present embodiment, and can be obtained by foaming the rubber material of the present embodiment or the rubber composition of the present embodiment. For example, the foamed product of the present embodiment can be obtained by vulcanizing a rubber composition containing the rubber material of the present embodiment and a foaming agent.

A molded article of the present embodiment is a molded article composed of the vulcanizate (a molded article using the vulcanizate) of the present embodiment or a molded article composed of the foamed product (a molded article using the foamed product) of the present embodiment, and can be obtained by molding the vulcanizate of the present embodiment or the foamed product of the present embodiment. Examples of the molded article include a transmission belt, a conveyor belt, a vibration-proof rubber, an air spring (for example, an automobile air spring), a hose (a hose product), and a sponge (a sponge product). A molded article may be obtained by, after mixing the constituents (such as the rubber material, the vulcanizing agent, and the foaming agent) of the rubber composition, molding in a desired shape and then performing a vulcanization treatment and/or a foaming treatment. Furthermore, a molded article may be obtained by, after mixing the constituents of the rubber composition, performing a vulcanization treatment and/or a foaming treatment and then molding in a desired shape.

A first aspect of a laminate of the present embodiment includes the vulcanizate of the present embodiment and a fiber base material stacked on the vulcanizate. A second aspect of the laminate of the present embodiment includes the foamed product of the present embodiment and a fiber base material stacked on the foamed product. In a case where the vulcanizate or the foamed product has surfaces facing each other, the fiber base material may be stacked on one surface or both surfaces of the vulcanizate or the foamed product. Examples of the fiber base material include jersey fabrics of polyester fibers, nylon fibers, and the like. The second aspect of the laminate of the present embodiment can be used as a fabric for a wet suit.

A wet suit of the present embodiment is a wet suit including the foamed product of the present embodiment. The wet suit of the present embodiment includes the aforementioned laminate of the second aspect, and includes the foamed product of the present embodiment and a fiber base material stacked on the foamed product. The wet suit of the present embodiment can be obtained, for example, by stacking (laminating) a fiber base material on one surface or both surfaces of a foamed base material, which is obtained by subjecting the foamed product of the present embodiment to slice processing into a desired thickness, to obtain a fabric, and then sewing this fabric.

## Examples

Hereinafter, the present invention will be more specifically described on the basis of Examples and Comparative Examples; however, the present invention is not limited to these Examples.

<Production of rubber material>

(Example 1)

To a polymerization tank having an inner volume of 30 L, 100 parts by mass of chloroprene (monomer), 0.40 parts by mass of sulfur, 120 parts by mass of pure water, 2.99 parts by mass of a conjugate resin acid-based potassium rosinate (trade name "HARTALL R-WW", manufactured by Harima Chemicals, Inc.) salt A, 0.82 parts by mass of sodium hydroxide, and 0.5 parts by mass of a sodium salt of β-naphthalene sulfonic acid formalin condensate (trade name "DEMOL N", manufactured by Kao Corporation) were added. 0.1 parts by mass of potassium persulfate was added as a polymerization initiator, and then polymerization was performed under a nitrogen flow at a polymerization temperature of 40°C. 0.1 parts by mass of diethylhydroxylamine as a polymerization terminator was added at the time point of a polymerization rate of 70% to terminate the polymerization, thereby obtaining a polymer solution. 0.52 parts by mass of a conjugate resin acid-based potassium rosinate salt B (the same contents as in the conjugate resin acid-based potassium rosinate salt A) was added to this polymer solution after the end of polymerization. Thereafter, unreacted monomers were removed by distillation under a reduced pressure, thereby obtaining a latex before plasticization (post-polymerization latex).

Subsequently, a plasticizer emulsion composed of 3.0 parts by mass of chloroprene, 2.0 parts by mass of tetraethylthiuram disulfide (trade name "NOCCELER TET", manufactured by OUCHI SHINKO CHEMICAL INDUSTRIAL CO., LTD.), 0.05 parts by mass of a sodium salt of β-naphthalene sulfonic acid formalin condensate, and 0.05 parts by mass of sodium laurylsulfate was added to this latex before plasticization, and the mixture was kept at a temperature of 50°C for 1 hour under stirring for plasticization, thereby obtaining a latex after plasticization.

Thereafter, this latex after plasticization was allowed to cool and adjusted to a pH of 6.0 by addition of acetic acid. Subsequently, isolation was performed by a common freeze-solidification method to obtain a rubber material containing a sulfur-modified chloroprene polymer and the like.

(Example 2)

A rubber material was obtained by the same operation as in Example 1, except that the used amount of the sulfur was changed to 0.40 parts by mass, the used amount of the conjugate resin acid-based potassium rosinate salt A was changed to 3.85 parts by mass, and the used amount of the conjugate resin acid-based potassium rosinate salt B was changed to 1.24 parts by mass.

(Example 3)

A rubber material was obtained by the same operation as in Example 1, except that the used amount of the sulfur was changed to 0.40 parts by mass, the used amount of the conjugate resin acid-based potassium rosinate salt A was changed to 4.30 parts by mass, and the used amount of the conjugate resin acid-based potassium rosinate salt B was changed to 0.88 parts by mass.

(Example 4)

A rubber material was obtained by the same operation as in Example 1, except that the used amount of the sulfur was changed to 0.49 parts by mass, the used amount of the conjugate resin acid-based potassium rosinate salt A was changed to 3.01 parts by mass, and the used amount of the conjugate resin acid-based potassium rosinate salt B was changed to 0.46 parts by mass.

(Example 5)

A rubber material was obtained by the same operation as in Example 1, except that the used amount of the sulfur was changed to 0.50 parts by mass, the used amount of the conjugate resin acid-based potassium rosinate salt A was changed to 4.22 parts by mass, and the used amount of the conjugate resin acid-based potassium rosinate salt B was changed to 0.98 parts by mass.

(Example 6)

A rubber material was obtained by the same operation as in Example 1, except that the used amount of the sulfur was changed to 0.60 parts by mass, the used amount of the conjugate resin acid-based potassium rosinate salt A was changed to 3.71 parts by mass, and the used amount of the conjugate resin acid-based potassium rosinate salt B was changed to 1.41 parts by mass.

(Example 7)

A rubber material was obtained by the same operation as in Example 1, except that the used amount of the sulfur was changed to 0.58 parts by mass, the used amount of the conjugate resin acid-based potassium rosinate salt A was changed to 3.03 parts by mass, and the used amount of the conjugate resin acid-based potassium rosinate salt B was changed to 0.45 parts by mass.

(Example 8)

A rubber material was obtained by the same operation as in Example 1, except that the used amount of the sulfur was changed to 0.60 parts by mass, the used amount of the conjugate resin acid-based potassium rosinate salt A was changed to 1.87 parts by mass, and the used amount of the conjugate resin acid-based potassium rosinate salt B was changed to 1.12 parts by mass.

(Example 9)

A rubber material was obtained by the same operation as in Example 1, except that the used amount of the sulfur was changed to 0.66 parts by mass, the used amount of the conjugate resin acid-based potassium rosinate salt A was changed to 3.31 parts by mass, and the used amount of the conjugate resin acid-based potassium rosinate salt B was changed to 1.27 parts by mass.

(Example 10)

A rubber material was obtained by the same operation as in Example 1, except that the used amount of the sulfur was changed to 0.66 parts by mass, the used amount of the conjugate resin acid-based potassium rosinate salt A was changed to 4.53 parts by mass, and the used amount of the conjugate resin acid-based potassium rosinate salt B was changed to 3.67 parts by mass.

(Example 11)

A rubber material was obtained by the same operation as in Example 1, except that the used amount of the sulfur was changed to 0.68 parts by mass, the used amount of the conjugate resin acid-based potassium rosinate salt A was changed to 4.55 parts by mass, and the used amount of the conjugate resin acid-based potassium rosinate salt B was changed to 2.72 parts by mass.

(Example 12)

A rubber material was obtained by the same operation as in Example 1, except that the used amount of the sulfur was changed to 0.77 parts by mass, the used amount of the conjugate resin acid-based potassium rosinate salt A was changed to 3.44 parts by mass, and the used amount of the conjugate resin acid-based potassium rosinate salt B was changed to 3.97 parts by mass.

(Example 13)

A rubber material was obtained by the same operation as in Example 1, except that the used amount of the sulfur was changed to 0.77 parts by mass, the used amount of the conjugate resin acid-based potassium rosinate salt A was changed to 4.07 parts by mass, and the used amount of the conjugate resin acid-based potassium rosinate salt B was changed to 4.12 parts by mass.

(Comparative Example 1)

A rubber material was obtained by the same operation as in Example 1, except that the used amount of the sulfur was changed to 0.34 parts by mass, 4.03 parts by mass of a disproportionated potassium rosinate salt (trade name "BANDIS G-25K", manufactured by Harima Chemicals, Inc.) was used instead of the conjugate resin acid-based potassium rosinate salt A, and the used amount of the conjugate resin acid-based potassium rosinate salt B was changed to 0 parts by mass.

(Comparative Example 2)

A rubber material was obtained by the same operation as in Example 1, except that the used amount of the sulfur was changed to 0.50 parts by mass, 3.95 parts by mass of a disproportionated potassium rosinate salt (trade name "BANDIS G-25K", manufactured by Harima Chemicals, Inc.) was used instead of the conjugate resin acid-based potassium rosinate salt A, and the used amount of the conjugate resin acid-based potassium rosinate salt B was changed to 0 parts by mass.

(Comparative Example 3)

A rubber material was obtained by the same operation as in Example 1, except that the used amount of the sulfur was changed to 0.50 parts by mass, the used amount of the conjugate resin acid-based potassium rosinate salt A was changed to 1.83 parts by mass, and the used amount of the conjugate resin acid-based potassium rosinate salt B was changed to 0 parts by mass.

(Comparative Example 4)

A rubber material was obtained by the same operation as in Example 1, except that the used amount of the sulfur was changed to 0.60 parts by mass, 3.82 parts by mass of a disproportionated potassium rosinate salt (trade name "BANDIS G-25K", manufactured by Harima Chemicals, Inc.) was used instead of the conjugate resin acid-based potassium rosinate salt A, and the used amount of the conjugate resin acid-based potassium rosinate salt B was changed to 0 parts by mass.

(Comparative Example 5)

A rubber material was obtained by the same operation as in Example 1, except that the used amount of the sulfur was changed to 0.66 parts by mass, the used amount of the conjugate resin acid-based potassium rosinate salt A was changed to 3.05 parts by mass, and the used amount of the conjugate resin acid-based potassium rosinate salt B was changed to 0.65 parts by mass.

(Comparative Example 6)

A rubber material was obtained by the same operation as in Example 1, except that the used amount of the sulfur was changed to 0.67 parts by mass, the used amount of the conjugate resin acid-based potassium rosinate salt A was changed to 1.76 parts by mass, and the used amount of the conjugate resin acid-based potassium rosinate salt B was changed to 0 parts by mass.

(Comparative Example 7)

A rubber material was obtained by the same operation as in Example 1, except that the used amount of the sulfur was changed to 0.71 parts by mass, the used amount of the conjugate resin acid-based potassium rosinate salt A was changed to 4.34 parts by mass, and the used amount of the conjugate resin acid-based potassium rosinate salt B was changed to 0.67 parts by mass.

(Comparative Example 8)

A rubber material was obtained by the same operation as in Example 1, except that the used amount of the sulfur was changed to 0.77 parts by mass, the used amount of the conjugate resin acid-based potassium rosinate salt A was changed to 4.21 parts by mass, and the used amount of the conjugate resin acid-based potassium rosinate salt B was changed to 0.92 parts by mass.

(Comparative Example 9)

A rubber material was obtained by the same operation as in Example 1, except that the used amount of the sulfur was changed to 0.82 parts by mass, the used amount of the conjugate resin acid-based potassium rosinate salt A was changed to 3.81 parts by mass, and the used amount of the conjugate resin acid-based potassium rosinate salt B was changed to 4.63 parts by mass.

<Measurement of content X of bound sulfur in rubber material>

The aforementioned rubber material was refined with a mixed solution of benzene : methanol = 3 : 5 (mass ratio) and then freeze-dried to obtain a sample. The content X (unit: % by mass) of the bound sulfur (the sulfur constituting the sulfur-modified chloroprene polymer) in the rubber material was measured using this sample by an oxygen combustion flask method defined in JIS K 6233-1. The measurement result of the content X, a value A (= 13.90X - 5.10) corresponding to the left member of Formula (A) mentioned above, and a value B (= 13.90X - 4.00) corresponding to the left member of Formula (B) mentioned above are shown in Table 1 and Table 2.

<Measurement of content C1 of free sulfur in rubber material>

The aforementioned rubber material was cut to obtain a test piece. Liquid chromatography was performed under the following conditions using a solution obtained by dissolving 20 mg of this test piece in 10 g of THF (tetrahydrofuran). The peak area of the free sulfur (the sulfur not constituting the sulfur-modified chloroprene polymer) was determined from the measurement result of the liquid chromatography.

[Conditions of liquid chromatography]

· Used column: Shodex KF-803L
· Detector: UV (UV detection wavelength of 264 nm)
· Column temperature: 40°C
· Flow rate: 1 mL/min

The content (unit: ppm) of the free sulfur in the THF solution corresponding to the peak area obtained in the aforementioned measurement was obtained using a standard curve showing a relation between the peak area and the content in the free sulfur. The standard curve was separately created using two kinds of THF solutions having sulfur contents of 1 ppm and 10 ppm, respectively. Next, the content C1 (unit: % by mass) of the free sulfur in the rubber material was obtained using the content of the free sulfur in the THF solution. The measurement result of the content C1, and the total amount (sulfur total amount) C2 of the content X and the content C1 are shown in Table 1 and Table 2.

<Measurement of total amount Y of conjugate resin acid components in rubber material>

The aforementioned rubber material was cut to obtain a test piece. 3.0 g of this test piece was placed in an eggplant-shaped flask equipped with a condenser, and then an extract obtained by extraction with an ethanol/toluene azeotropic mixture (ETA solution) defined in JIS K 6229 was acid-treated with hydrochloric acid and fixed to a volume of 50 mL with hydrochloric acid. Gas chromatography was performed under the following conditions using the volume-fixed solution. The peak area of the conjugate resin acid component of each of the abietic acid component (an abietic acid and a salt thereof; this is also the same for other conjugate resin acids), the palustric acid component, the neoabietic acid component, and the levopimaric acid component was determined from the measurement result of the gas chromatography.

[Conditions of gas chromatography]

· Used column: FFAP 0.32 mmφ × 25 m (film thickness: 0.3 μm)
· Detector: FID
· Column temperature: 200°C → 250°C
· Temperature increase rate: 10°C/min
· Injection port temperature: 270°C
· Detector temperature: 270°C
· Injection amount: 2 μL

For the conjugate resin acid component of each of the abietic acid component, the palustric acid component, the neoabietic acid component, and the levopimaric acid component, the content (unit: g/ml) of the conjugate resin acid component in the ETA solution corresponding to the peak area obtained in the aforementioned measurement was obtained using a standard curve showing a relation between the peak area and the content in the conjugate resin acid component. The standard curve was separately created for the conjugate resin acid component of each of the abietic acid component, the palustric acid component, the neoabietic acid component, and the levopimaric acid component, using three kinds of ETA solutions having contents of the conjugate resin acid component of 1 g/ml, 2.5 g/ml, and 5 g/ml, respectively. Next, the content (unit: % by mass) of each of the abietic acid component, the palustric acid component, the neoabietic acid component, and the levopimaric acid component in the rubber material was obtained using the content of the conjugate resin acid component in the ETA solution.

The sum of the contents of the abietic acid component, the palustric acid component, the neoabietic acid component, and the levopimaric acid component in the rubber material was obtained as the total amount Y (unit: % by mass) of the conjugate resin acid components (the conjugate resin acid and the salt of the conjugate resin acid). The measurement result of the total amount Y of the conjugate resin acid components, the magnitude relationship between the total amount Y and the value A, and the magnitude relationship between the total amount Y and the value B are shown in Table 1 and Table 2. Furthermore, the relation between the content X (bound sulfur amount) and the total amount Y (conjugate resin acid component amount) is shown in FIG. 1.

<Production of foamed product>

According to JIS K 6299, 100 parts by mass of the aforementioned rubber material, 5 parts by mass of zinc oxide (trade name "Zinc oxide II", manufactured by SAKAI CHEMICAL INDUSTRY CO., LTD.), 4 parts by mass of magnesium oxide (trade name "Kyowamag 150", manufactured by Kyowa Chemical Industry Co., Ltd.), 8 parts by mass of p,p'-oxybisbenzenesulfonyl hydrazide (trade name "Cellmic S", manufactured by SANKYO KASEI CO., LTD.), 1 part by mass of stearic acid, 1 part by mass of paraffin wax (trade name "Paraffin Wax-130", manufactured by Nippon Seiro Co., Ltd.), 2 parts by mass of a fatty acid ester-based lubricant (trade name "WB-212", manufactured by S&S Japan Co., LTD.), 1 part by mass of octylated diphenylamine (trade name "NONFLEX OD-3", manufactured by Seiko Chemical Co., Ltd.), 1 part by mass of nickel dibutyldithiocarbamate (trade name "NOCRAC NBC", manufactured by OUCHI SHINKO CHEMICAL INDUSTRIAL CO., LTD.), 15 parts by mass of naphthenic process oil (trade name "NP-24", manufactured by Idemitsu Kosan Co., Ltd.), 20 parts by mass of aromatic process oil (trade name "AH-16", manufactured by Idemitsu Kosan Co., Ltd.), 10 parts by mass of carbon black (trade name "N990", manufactured by CANCARB LIMITED), 10 parts by mass of DIXIE CLAY (trade name "DIXIE CLAY", manufactured by Vanderbilt Chemicals, LLC), and 15 parts by mass of sulfur factice (trade name "Brown#21", manufactured by TENMA FACTICE MFG.CO., LTD.) were mixed and then kneaded to obtain an unvulcanized rubber compound. Kneading was performed with a mixing mill using an 8-inch roll set at a roll temperature of 40°C.

The aforementioned unvulcanized rubber compound was subjected to press vulcanization twice according to JIS K 6299, thereby producing a foamed product. Specifically, as primary vulcanization (first press vulcanization), 102 g (filling rate: 105%) of the unvulcanized rubber compound was placed in a mold having a cavity region with a length of 100 mm, a width of 95 mm, and a height of 8 mm, and vulcanization was performed in this cavity region for 10 minutes under the conditions of a pressure of 3.5 MPa and 150°C. Thereafter, under the atmospheric pressure, the mold was left to stand still for 10 minutes under the condition of 23°C to obtain a primary vulcanized compound. Subsequently, as secondary vulcanization (second press vulcanization), the primary vulcanized compound was placed in a mold having a cavity region with a length of 175 mm, a width of 170 mm, and a height of 16 mm, and vulcanization was performed in this cavity region for 20 minutes under the conditions of a pressure of 3.5 MPa and 155°C.

<Evaluation of foamed product>

(Shrinkage rate)

Under the atmospheric pressure, the aforementioned foamed product was left to stand still for 168 hours under the condition of 23°C, and then the surface layer of the foamed product was sliced into a thickness of 2 mm $\pm$ 0.20 mm, thereby obtaining a foamed product sheet. The dimension of the foamed product sheet immediately after slicing was measured to obtain a vertical length $H_0$ (mm) and a horizontal length $L_0$ (mm) of the foamed product sheet. Thereafter, under the atmospheric pressure, the foamed product sheet was left to stand still for 168 hours under the condition of 23°C and then the dimension of the foamed product sheet was measured again to obtain a vertical length $H_1$ (mm) and a horizontal length $L_1$ (mm) of the foamed product sheet. A shrinkage rate (%) was calculated using the dimensions of the foamed product sheet before and after being left to stand still by the following expression. Results are presented in Table 1 and Table 2. A case where the shrinkage rate was 6.00% or less was determined as good.

$$\text{Shrinkage rate (\%)} = [(H_0 \times L_0 - H_1 \times L_1)/(H_0 \times L_0)] \times 100$$

(Ozone test)

A test piece was produced according to JIS K 6250. A dynamic ozone deterioration test was performed according to JIS K 6259-1, and cracks occurring when the test piece continued to be exposed to ozone under the conditions of a test temperature of 40°C, an ozone concentration of 50 pphm, and an elongation rate of 20% were observed. The cracks were observed by visual inspection, and depending on cases, were observed by a magnifying glass. According to JIS K 6259-1, ranking evaluation by the number of cracks (the number "a" of cracks) and ranking evaluation by the size and depth of cracks (the dimension "b" of cracks) were performed, and scoring was performed on the basis of the following criteria. Furthermore, a product (a × b) of scores of the number "a" of cracks and the dimension "b" of cracks was calculated as an evaluation index of ozone resistance. Results are presented in Table 1 and Table 2. A case where the product (a × b) was 9 or less was determined as good.

[Raking by number of cracks (number "a" of cracks)]

    1 point: The number of cracks is small.
    3 points: The number of cracks is large.

[Raking by size and depth of cracks (dimension "b" of cracks)]

    1 point: Cracks are not confirmable with the naked eye but can be confirmed by a magnifying glass (10×).
    2 points: Cracks can be confirmed with the naked eye.
    3 points: Cracks are deep and relatively large (less than 1 mm).
    4 points: Cracks are deep and large (1 mm or more and less than 3 mm).

[Table 1]

| | | Unit | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Analysis result of rubber material | Amount (X) of bound sulfur | % by mass | 0.27 | 0.27 | 0.28 | 0.35 | 0.35 | 0.41 | 0.43 | 0.45 | 0.50 | 0.50 | 0.52 | 0.60 | 0.60 |
| | Amount (C1) of free sulfur | | 0.20 | 0.23 | 0.21 | 0.28 | 0.23 | 0.38 | 0.36 | 0.38 | 0.43 | 0.43 | 0.45 | 0.52 | 0.52 |
| | Sulfur total amount C2 (= X + C1) | | 0.47 | 0.50 | 0.49 | 0.63 | 0.58 | 0.79 | 0.79 | 0.83 | 0.93 | 0.93 | 0.97 | 1.12 | 1.12 |
| | Amount (Y) of conjugate resin acid components | | 1.45 | 2.29 | 2.33 | 1.45 | 2.29 | 2.25 | 1.45 | 1.21 | 2.09 | 3.65 | 3.26 | 3.30 | 3.66 |
| | A(= 13.90X - 5.10) | | -1.35 | -1.35 | -1.21 | -0.23 | -0.23 | 0.60 | 0.88 | 1.16 | 1.85 | 1.85 | 2.13 | 3.24 | 3.24 |
| | B (= 13.90X - 4.00) | | -0.25 | -0.25 | -0.11 | 0.87 | 0.87 | 1.70 | 1.98 | 2.26 | 2.95 | 2.95 | 3.23 | 4.34 | 4.34 |
| | Determination on A ≤ Y | | YES | YES | YES | YES | YES | YES | YES | YES | YES | YES | YES | YES | YES |
| | Determination on B ≤ Y | | YES | YES | YES | YES | YES | YES | NO | NO | NO | YES | YES | NO | NO |
| Evaluation result | Shrinkage rate of foamed product | % | 5.56 | 5.40 | 5.40 | 3.96 | 2.90 | 2.40 | 2.00 | 1.80 | 1.17 | 1.97 | 2.10 | 2.00 | 1.20 |
| | Ozone test — Number (a) of cracks | - | 3 | 1 | 1 | 3 | 3 | 3 | 3 | 3 | 3 | 3 | 3 | 3 | 3 |
| | Ozone test — Dimension (b) of cracks | | 1 | 2 | 2 | 2 | 1 | 2 | 3 | 3 | 3 | 2 | 2 | 3 | 3 |
| | (a) x (b) | | 3 | 2 | 2 | 6 | 3 | 6 | 9 | 9 | 9 | 6 | 6 | 9 | 9 |

EP 4 227 325 B1

[Table 2]

| | | Unit | Comparative Example | | | | | | | | |
|---|---|---|---|---|---|---|---|---|---|---|---|
| | | | 1 | 2 | 3 | 4 | 5 | 6 | 7 | 8 | 9 |
| Analysis result of rubber material | Amount (X) of bound sulfur | % by mass | 0.22 | 0.36 | 0.36 | 0.47 | 0.50 | 0.51 | 0.55 | 0.60 | 0.64 |
| | Amount (C1) of free sulfur | | 0.15 | 0.26 | 0.29 | 0.41 | 0.43 | 0.44 | 0.48 | 0.52 | 0.56 |
| | Sulfur total amount C2 (= X + C1) | | 0.37 | 0.62 | 0.65 | 0.88 | 0.93 | 0.95 | 1.03 | 1.12 | 1.20 |
| | Amount (Y) of conjugate resin acid components | | 0.00 | 0.00 | 0.72 | 0.00 | 1.53 | 0.72 | 2.21 | 2.29 | 3.78 |
| | A (= 13.90X - 5.10) | | -2.04 | -0.10 | -0.10 | 1.43 | 1.85 | 1.99 | 2.55 | 3.24 | 3.80 |
| | B (= 13.90X - 4.00) | | -0.94 | 1.00 | 1.00 | 2.53 | 2.95 | 3.09 | 3.65 | 4.34 | 4.90 |
| | Determination on A ≤ Y | - | YES | YES | YES | NO | NO | NO | NO | NO | NO |
| | Determination on B ≤ Y | | YES | NO | NO | NO | NO | NO | NO | NO | NO |
| Evaluation result | Shrinkage rate of foamed product | % | 6.20 | 2.50 | 2.80 | 1.40 | 1.70 | 0.90 | 1.60 | 1.50 | 2.50 |
| | Ozone test — Number (a) of cracks | - | 3 | 3 | 3 | 3 | 3 | 3 | 3 | 3 | 3 |
| | Ozone test — Dimension (b) of cracks | | 1 | 4 | 4 | 4 | 4 | 4 | 4 | 4 | 4 |
| | Ozone test — (a) × (b) | | 3 | 12 | 12 | 12 | 12 | 12 | 12 | 12 | 12 |

As shown in Table 1 and Table 2, it can be confirmed that a foamed product having excellent ozone resistance can be obtained while suppressing shrinkage after foaming by the content X and the total amount Y satisfying Expression (A) and the total amount Y being 1.00% by mass or more.

**Claims**

1.  A rubber material comprising a sulfur-modified chloroprene polymer, wherein

    a content of a chloroprene monomer unit is 98% by mass or more on the basis of a total amount of monomer units constituting the sulfur-modified chloroprene polymer,
    a content X (% by mass) of sulfur constituting the sulfur-modified chloroprene polymer and a total amount Y (% by mass) of a conjugate resin acid and a salt of a conjugate resin acid, on the basis of a total amount of the rubber material, satisfy Expression (A) below,
    the content X is 0.25 % by mass or more, and
    the total amount Y is 1.00% by mass or more.

$$13.90X - 5.10 \leq Y \qquad (A)$$

2.  The rubber material according to claim 1, wherein the content X and the total amount Y, on the basis of the total amount of the rubber material, satisfy Expression (B) below.

$$13.90X - 4.00 \leq Y \qquad (B)$$

3.  The rubber material according to claim 1 or 2, wherein the content X is 0.25 to 0.60% by mass.

4.  The rubber material according to any one of claims 1 to 3, wherein the total amount Y is 1.40% by mass or more.

5.  The rubber material according to any one of claims 1 to 4, wherein a total amount of sulfur constituting the sulfur-modified chloroprene polymer and sulfur not constituting the sulfur-modified chloroprene polymer is 0.50 to 1.00% by mass on the basis of the total amount of the rubber material.

6.  A rubber composition comprising the rubber material according to any one of claims 1 to 5 and a vulcanizing agent.

7.  A rubber composition comprising the rubber material according to any one of claims 1 to 5 and a foaming agent.

8.  A vulcanizate of the rubber composition according to claim 6.

9.  A foamed product of the rubber composition according to claim 7.

10. A wet suit comprising the foamed product according to claim 9.

**Patentansprüche**

1.  Kautschukmaterial, umfassend ein schwefelmodifiziertes Chloprenpolymer, wobei

    ein Gehalt an einer Chloprenmonomereinheit 98 Massen-% oder mehr, bezogen auf eine Gesamtmenge der Monomereinheiten, die das schwefelmodifizierte Chloprenpolymer bilden, beträgt,
    ein Gehalt X (Massen-%) an Schwefel, der das schwefelmodifizierte Chloprenpolymer bildet, und eine Gesamtmenge Y (Massen-%) einer konjugierten Harzsäure und eines Salzes einer konjugierten Harzsäure, bezogen auf eine Gesamtmenge des Kautschukmaterials, den nachstehenden Ausdruck (A) erfüllen,
    der Gehalt X 0,25 Massen-% oder mehr beträgt, und
    die Gesamtmenge Y 1,00 Massen-% oder mehr beträgt.

$$13{,}90X - 5{,}10 \leq Y \quad (A)$$

**2.** Kautschukmaterial gemäß Anspruch 1, wobei der Gehalt X und die Gesamtmenge Y, bezogen auf die Gesamtmenge des Kautschukmaterials, den nachstehenden Ausdruck (B) erfüllen.

$$13{,}90X - 4{,}00 \leq Y \quad (B)$$

**3.** Kautschukmaterial gemäß Anspruch 1 oder 2, wobei der Gehalt X 0,25 bis 0,60 Massen-% beträgt.

**4.** Kautschukmaterial gemäß einem der Ansprüche 1 bis 3, wobei die Gesamtmenge Y 1,40 Massen-% oder mehr beträgt.

**5.** Kautschukmaterial gemäß einem der Ansprüche 1 bis 4, wobei eine Gesamtmenge an Schwefel, der das schwefelmodifizierte Chloroprenpolymer bildet, und an Schwefel, der das schwefelmodifizierte Chloroprenpolymer nicht bildet, 0,50 bis 1,00 Massen-%, bezogen auf die Gesamtmenge des Kautschukmaterials, beträgt.

**6.** Kautschukzusammensetzung, umfassend das Kautschukmaterial gemäß einem der Ansprüche 1 bis 5 und ein Vulkanisierungsmittel.

**7.** Kautschukzusammensetzung, umfassend das Kautschukmaterial gemäß einem der Ansprüche 1 bis 5 und ein Schäumungsmittel.

**8.** Vulkanisat der Kautschukzusammensetzung gemäß Anspruch 6.

**9.** Geschäumtes Produkt der Kautschukzusammensetzung gemäß Anspruch 7.

**10.** Neoprenanzug, umfassend das geschäumte Produkt gemäß Anspruch 9.


**Revendications**

**1.** Matériau de caoutchouc comprenant un polymère de chloroprène modifié par du soufre, dans lequel

une teneur d'une unité monomère de chloroprène est de 98 % en masse ou plus sur la base d'une quantité totale d'unités monomères constituant le polymère de chloroprène modifié par du soufre,
une teneur X (% en masse) de soufre constituant le polymère de chloroprène modifié par du soufre et une quantité totale Y (% en masse) d'un acide de résine conjugué et d'un sel d'un acide de résine conjugué, sur la base d'une quantité totale du matériau de caoutchouc, satisfont l'Expression (A) ci-dessous,
la teneur X est de 0,25 % en masse ou plus, et
la quantité totale Y est de 1,00 % en masse ou plus.

$$13{,}90X - 5{,}10 \leq Y \quad (A)$$

**2.** Matériau de caoutchouc selon la revendication 1, dans lequel la teneur X et la quantité totale Y, sur la base de la quantité totale du matériau de caoutchouc, satisfont l'Expression (B) ci-dessous.

$$13{,}90X - 4{,}00 \leq Y \quad (B)$$

**3.** Matériau de caoutchouc selon la revendication 1 ou la revendication 2, dans lequel la teneur X est de 0,25 à 0,60 % en masse.

**4.** Matériau de caoutchouc selon l'une quelconque des revendications 1 à 3, dans lequel la quantité totale Y est de 1,40 % en masse ou plus.

**5.** Matériau de caoutchouc selon l'une quelconque des revendications 1 à 4, dans lequel une quantité totale de soufre constituant le polymère de chloroprène modifié par du soufre et de soufre ne constituant pas le polymère de chloroprène modifié par du soufre est de 0,50 à 1,00 % en masse sur la base de la quantité totale du matériau de caoutchouc.

**6.** Composition de caoutchouc comprenant le matériau de caoutchouc selon l'une quelconque des revendications 1 à 5 et un agent de vulcanisation.

**7.** Composition de caoutchouc comprenant le matériau de caoutchouc selon l'une quelconque des revendications 1 à 5 et un agent moussant.

**8.** Vulcanisat de la composition de caoutchouc selon la revendication 6.

**9.** Produit expansé de la composition de caoutchouc selon la revendication 7.

**10.** Combinaison isotherme comprenant le produit expansé selon la revendication 9.

# Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012067235 A
- JP H10298328 A
- JP 2014169378 A
- JP 2020139009 A